# EUROPEAN PATENT APPLICATION

(11) **EP 2 876 585 A1**
(43) Date of publication of application: **27.05.2015**
(21) Application number: 13816092.4
(22) Date of filing: 14.03.2013
(51) Int. Cl.: G06Q 10/00

(54) **NETWORK TRANSACTION PLATFORM SYSTEM AND METHOD HAVING MERCHANDISE SUBSCRIPTION STRUCTURE**

(30) Priority: 11.07.2012 CN 201210240718
(71) Applicant: Beijing Changshengtiandi Ecommerce Co. Ltd., Beijing 100026 (CN)
(72) Inventor: YAN, Yanchun, Beijing 100026 (CN)
(74) Representative: Riebling, Peter
(86) International application number: PCT/CN2013/072584
(87) International publication number: WO 2014/008765

(57) **Abstract**

The present invention provides a network transaction platform system having a goods subscribing structure, the system comprising: a product information database for storing product information; a personal consumption space configured to publish and reside a user's subscription information; an information publishing module configured to publish the subscription information in the personal consumption space; a goods subscribing structure which resides in the personal consumption space on the network transaction platform and comprises a subscription information listing module and a goods listing module, wherein the subscription information listing module is configured to generate and store a listing of the subscription information, and the goods listing module is configured to generate and store listing information of goods related to the subscription information. The present invention further provides a network transaction method utilizing a goods subscribing structure. The network transaction platform system having a goods subscribing structure and the network transaction method utilizing the goods subscribing structure according to the present invention may perform functions of processing, storing, classifying and matching the goods information so as to provide more convenience and higher safety to the user during consumption.

## Description

### BACKGROUND

The present invention relates to a platform system and method for network transaction, and particularly to a system and method for implementing the building of a personal consumption space by utilizing a network transaction platform, wherein the network transaction platform system has a goods subscribing structure.

In the current network transaction system, a usual network transaction mode is that a user searches for information about desired goods via tools such as the Internet, and forms a subscription or order by himself, adds the desired goods to a shopping cart, and finally accomplish the network transaction by way of Alipay or bank payment, that is to say, the forming of the order is accomplished by the user himself through search, and meanwhile a goods provider only needs to process the user's order information. However, this conventional network transaction mode requires the user to perform a lot of goods search or comparison work, and meanwhile analyze the relevant information to finally forms an order. In addition, once the order is formed, the user cannot manage or modify the order any more. Meanwhile, the commodity provider only needs to complete a step of delivering the goods according to the requirements on the order, and in turn cannot make anticipation and judgment as to the user's demand for some certain commodity and does not have a through mastery or oversight of the reserve and supply of goods.

### SUMMARY

In order overcome the above drawbacks in the prior art, the present invention provides a network transaction platform system having a goods subscribing structure, the system comprising:
a product information database configured to store product information;
a personal consumption space configured to publish and reside a user's subscription information;
an information publishing module configured to publish the subscription information in the personal consumption space;
a goods subscribing structure which resides in the personal consumption space on the network transaction platform and comprises a subscription information listing module and a goods listing module, wherein the subscription information listing module is configured to generate and store a listing of the subscription information, and the goods listing module is configured to generate and store listing information of goods related to the subscription information;
an extracting module configured to extract the listing of the subscription information from the subscription information listing module;
a matching module configured to perform match-processing for the subscription information in the subscription information listing with the product information;
a feedback module configured to feed back to the goods listing module those product information among the product information whose matching degree to the subscription information reaches a certain preset threshold;
a goods listing generating module configured to form the goods listing according to the fed-back product information.

According to a preferred embodiment of the present invention, the subscription information comprises at least one tag group which is comprised of at least one shopping tag for describing the user's shopping desire.

According to another preferred embodiment of the present invention, the network transaction platform system having the goods subscribing structure further comprises a login module configured to receive and verify login data used by the user to log in the personal consumption space.

According to a further preferred embodiment of the present invention, the network transaction platform system having the goods subscribing structure further comprises a goods matching module configured to classify the subscription information and perform mutual matching between the subscription information.

According to a further preferred embodiment of the present invention, the network transaction platform system having the goods subscribing structure further comprises a classifying and placing module configured to classify and arrange the subscription information.

According to a further preferred embodiment of the present invention, the network transaction platform system having the goods subscribing structure further comprises a display module configured to display different types of goods information on the goods subscribing structure.

According to a further preferred embodiment of the present invention, the network transaction platform system having the goods subscribing structure further comprises an evaluating module configured to evaluate the already-subscribed goods information and store evaluation information.

According to a further preferred embodiment of the present invention, the network transaction platform system having the goods subscribing structure further comprises a goods shelf self-classifying module configured to classify goods listing information stored in the goods listing module into editable various sub-listing information.

According to a further preferred embodiment of the present invention, the network transaction platform system having the goods subscribing structure further comprises a personal information storage space for storing personal information uploaded by the use;

the verification refers to matching and verifying the login data and the personal information stored in the personal information storage space.

According to a further preferred embodiment of the present invention, the method for the verification in the network transaction platform system having the goods subscribing structure comprise one or more of biological information recognition verification, information matching verification and identification recognition authentication.

According to a further preferred embodiment of the present invention, classification and matching in the network transaction platform system having the goods subscribing structure are implemented by comparing self-properties of goods and the matching degree information.

According to a further preferred embodiment of the present invention, in the network transaction platform system having the goods subscribing structure, the information publishing module, the extracting module, the matching module, the feedback module, the subscription information listing module, the goods listing module, the goods listing generating module, the goods matching module, classifying and placing module, the display module, the evaluating module and the goods listing classifying module work in real time or at a set time.

According to another aspect of the present invention, the present invention provides a network transaction method utilizing a goods subscribing structure, the method being implemented on the network transaction platform which is provided with a user's personal consumption space, the personal consumption space comprising a personal information storage space and a goods subscribing structure, the network transaction platform having a product information database, the method comprises the following steps:
an information publishing step of publishing the subscription information in the personal consumption space;
a subscription information listing generating step of generating and storing the subscription information in the goods subscribing structure;
an extracting step of extracting the listing of the subscription information from the goods subscribing structure;
a matching step of performing match processing for the subscription information in the goods subscribing structure with the product information;
a feedback step of feeding back to the goods subscribing structure those product information among the product information whose matching degree to the subscription information reaches a certain preset threshold;
a goods listing generating step of generating the goods listing according to the fed-back product information.

According to a preferred embodiment of the present invention, the subscription information comprises at least one tag group which is comprised of at least one shopping tag for describing the user's shopping desire.

According to another preferred embodiment of the present invention, the network transaction method utilizing the goods subscribing structure further comprises a login step of receiving and verifying login data used by the user to log in the personal consumption space.

According to a further preferred embodiment of the present invention, the network transaction method utilizing the goods subscribing structure further comprises a goods matching step of classifying the subscription information and performing mutual matching between the subscription information.

According to a further preferred embodiment of the present invention, the network transaction method utilizing the goods subscribing structure further comprises a classifying and placing step of classifying and arranging the subscription information.

According to a further preferred embodiment of the present invention, the network transaction method utilizing the goods subscribing structure further comprises a display step of displaying different types of goods information on the goods subscribing structure.

According to a further preferred embodiment of the present invention, the network transaction method utilizing the goods subscribing structure further comprises an evaluating method of evaluating the already-subscribed goods information and storing evaluation information.

According to a further preferred embodiment of the present invention, the network transaction method utilizing the goods subscribing structure further comprises a goods listing classifying step of classifying the goods listing information in the good subscribing structure into editable various sub-listing information.

According to a further preferred embodiment of the present invention, in the network transaction method utilizing the goods subscribing structure, the information publishing step, the subscription information listing generating step, the extracting step, the matching step, the feedback step, the goods listing generating step, the goods matching step, classifying and placing step, the display step, the evaluating step and the goods listing classifying step are executed in real time or at a set time.

The network transaction platform system having a goods subscribing structure and the network transaction method utilizing the goods subscribing structure according to the present invention have the following advantages:

First, the user only needs to place the subscription information on the goods subscribing structure in the personal consumption space according to his own likes and actual needs. Specific goods information is provided by the goods provider, and the user only needs to select the provided goods conveniently and quickly.

Secondly, the goods provider may perform preliminary evaluation for the goods of the user's interest according to the user's demand, namely, the subscription information, and thereby perform preliminary evaluation for information such as the number of the stored or provided goods, and thereby instruct the goods manufacturer to produce the goods.

Finally, the user may manage and update the listing of the subscription information and the goods listing on the goods shelf at any time so as to achieve self-management during the goods subscription.

### BRIEF DESCRIPTION OF THE SEVERAL VIEWS OF THE DRAWINGS

Other features, objects and advantages of the present invention will become more apparent from the following detailed description of non-limiting embodiments, when taken in conjunction with the accompanying drawings, wherein the same or similar reference generally refers to the same or similar components.
Fig.1 shows a schematic view illustrating a modularized structure of a network transaction platform system having a goods subscribing structure according to a preferred embodiment of the present invention;
Fig.2 shows a schematic view illustrating a modularized structure of a network transaction platform system having a goods subscribing structure according to another preferred embodiment of the present invention;
Fig.3 illustrates a flow chart of a network transaction method utilizing a goods subscribing structure according to a preferred embodiment of the present invention;
Fig.4 illustrates a flow chart of a network transaction method utilizing a goods subscribing structure according to another preferred embodiment of the present invention;
Figs.5-6 are views illustrating examples of a network transaction platform system and method having a goods subscribing structure according to the present invention.

### DETAILED DESCRIPTION

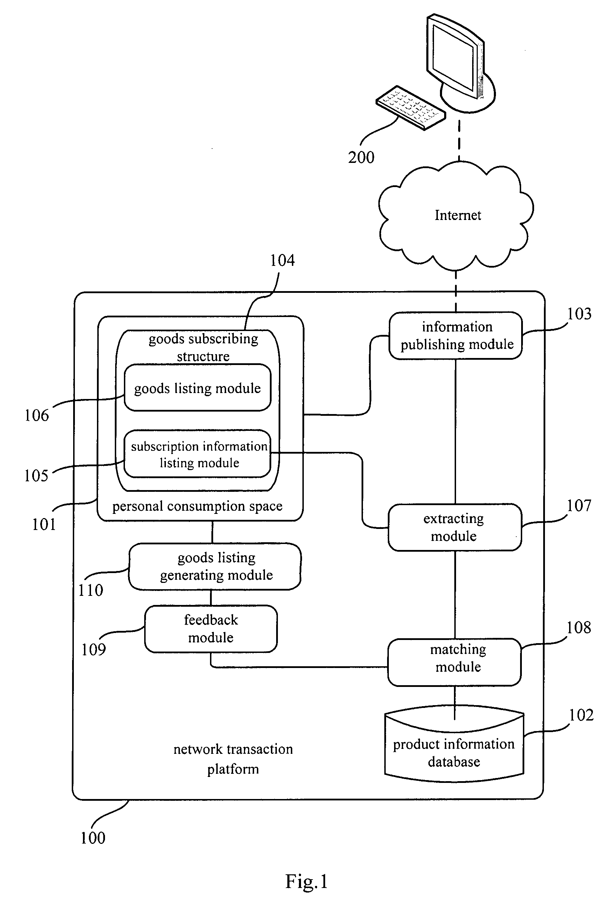

The present invention will be described in more detail with reference to Figs.1-6 to better understand and illustrate the present invention.

Fig.1 shows a schematic view illustrating a modularized structure of a network transaction platform system having a goods subscribing structure according to a preferred embodiment of the present invention. The system 100 comprises:
a product information database 102 configured to store product information;
a personal consumption space 101 configured to publish and reside a user's subscription information;
an information publishing module 103 configured to publish the subscription information in the personal consumption space 101;
a goods subscribing structure 104 which resides in the personal consumption space 101 on the network transaction platform and comprises a subscription information listing module 105 and a goods listing module 106, wherein the subscription information listing module 105 is configured to generate and store a listing of the subscription information, and the goods listing module 106 is configured to generate and store listing information of goods related to the subscription information;
an extracting module 107 configured to extract the listing of the subscription information from the subscription information listing module 105;
A matching module configured 108 to perform match processing for the subscription information in the subscription information listing with the product information;
A feedback module 109 configured to feed back to the goods listing module 106 those product information among the product information whose matching degree to the subscription information reaches a certain preset threshold;
A goods listing generating module 110 configured to form the goods listing according to the fed-back product information.

Specifically, in the present embodiment, the system 100 is implemented as a network transaction platform 100. Typically, the network transaction platform 100 is implemented as B/S architecture or C/S architecture which is easily used in a cross-platform manner, preferably implemented as the B/S architecture. Modules in the network transaction platform 100 are designed and operated based on said architectures.

The product information database 102 may be implemented by employing known technologies and configured to store product information. The product information may comprise product-related property data and description data. Typically, the product information database 102 is integrated in the network transaction platform 100. In some other embodiments, the product information database 102 may be implemented as a distributed server system, a server cluster or a server logic matrix constituted by a plurality of network servers.

In the present embodiment, the personal consumption space 101 is integrated in and resides on the network transaction platform 100 (in the text, the term "reside" refers to storing data and performing data invoking with respect to the stored data at any time); the subscription information is stored in and resides in the personal consumption space 101.

The information publishing module 103 publishes the subscription information and sends it to the personal consumption space 101. As shown in Fig.1, typically the information publishing module provides an input interface for a terminal 200 to input detailed content of the subscription information. The input interface may be implemented as a browser running on the terminal 200 or a computer data input interface on a client, for example a webpage that can receive input data. Noticeably, specific forms of the terminal 200 include but are not limited to a personal computer terminal in the present embodiment, and they further include smart mobile phones, flat panel computers, hand-held intelligent terminals or other intelligent terminals.

More typically, the subscription information is personal demand information published by the user and comprises at least one tag group. The tag group is comprised of at least one shopping tag for describing the user's shopping desire. Each shopping tag is used to describe one or more items among types, names, characteristics, brands, prices, inventory, promotional information, exhibit pictures or video and webpage links of products to be purchased. The information publishing module 103 processes the shopping tag or the tag group in the form of a data table and publishes it in the personal consumption space 101. Preferably, the user using the input interface of terminal 200 feeds back to information publishing module 103 input operation of checking or filling the personal demand information.

After the personal consumption space 101 stores and resides the subscription information, it may be set as private subscription information. Only authorized users may invoke the information for review or modification; the subscription information may be published publicly so that all or partial specific users of the network transaction platform 100 may review the subscription information. In a preferred embodiment, the above two methods may be used in combination.

The goods subscribing structure 104 resides in the personal consumption space 101 on the network transaction platform and comprises the subscription information listing module 105 and the goods listing module 106. The subscription information listing module 105 is configured to generate and store a listing of the subscription information, and the goods listing module 106 is configured to generate and store listing information of goods related to the subscription information. Preferably, the subscription information listing module 105 and the goods listing module 106 may be designed as a web human-machine interaction space included on a homepage of the network transaction platform, for example implemented as webpage-turning button, a pull-down list or a link directed to an individual webpage. Furthermore, the extracting module 107 is configured to extract the listing of the subscription information from the subscription information listing module 105. Typically, during background processing, the extracting module 107 converts the subscription information into data that can be identified and compared by the matching module 108 according to the subscription information listing and sends it to the matching module 108. Usually, the extracting is automatically accomplished by the extracting module 107, or accomplished by triggering after the extracting module 107 receives a specific request instruction.

The matching module 108 performs data interaction with the product information database 102 and matches the subscription information with product information stored in the product information database 102. Specific methods for implementing the matching include but are not limited to: performing character matching, word matching, figure matching, annotation matching or fuzzy matching between the subscription information and the product information. Typically, the matching module 108 may at least generate one or more matching factors according to the subscription information, for example, key words, figure characteristic value, known annotation properties of words (e.g., synonyms) and the like, and correspondingly, based on the matching factors, send a query matching request to the product information database 102 to obtain a result. The above procedure of achieving matching in the product information database 102 according to the matching factors is a commonly-used database query technology in the art and will not be described in detail for the sake of brevity.

The feedback module 109 may perform data interaction with the product information database 102 and the personal consumption space 101, to feed back to the goods listing module 106 those product information among the product information stored in the product information database 102 whose matching degree to the subscription information reaches a certain preset threshold. Specifically, in practical application, since the data amount of the product information is relatively huge, the threshold is set for the purpose of selecting from the product information matching information that is pertinent to the subscription information, i.e. the matching information is a subset of the product information. The product information is electronic data for describing attributes of an actual product that is selected by using matching information. Typically, the product information at least comprises: one or more of the product's category, name, feature, brand, price, inventory, promotional information, retailer, product presentation picture or video and product web page link, and the product's historical deals or reviews.

The goods listing generating module 110 is configured to form a goods listing according to the above fed-back production information. Specifically, the goods listing generating module 110 classifies the fed-back product information to form a goods listing in form of a document listing or index for the user's selection. The goods listing may be implemented in the form of a button, a pull-down list or an individually-set webpage for access (namely, a web link).

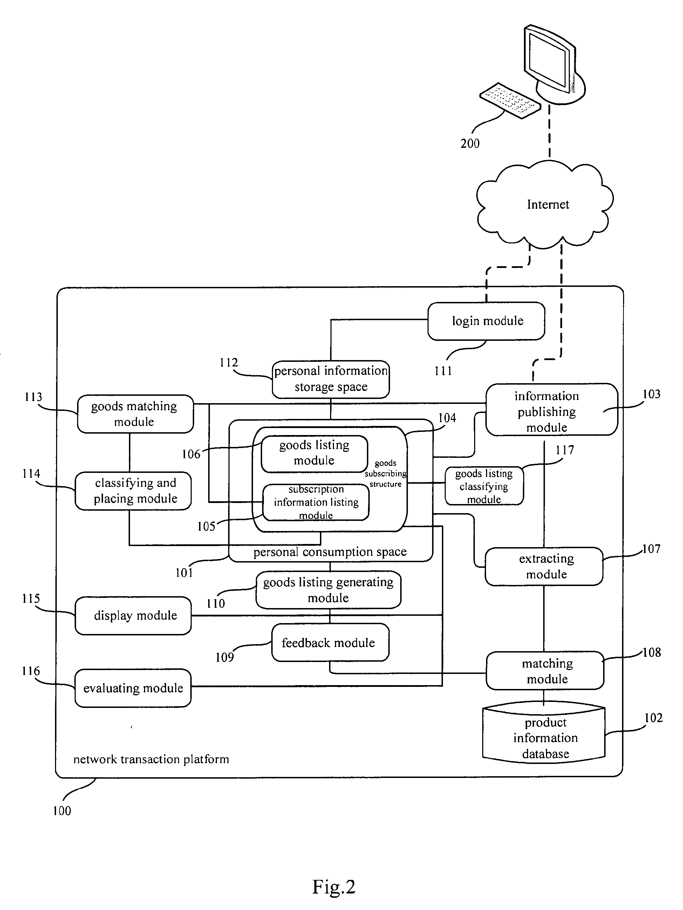

Furthermore, referring to Fig.2, Fig.2 illustrates a schematic view illustrating a modularized structure of a network transaction platform system having a goods subscribing structure according to another preferred embodiment of the present invention. In essence, it is an optimized improvement to the system 100 shown in Fig.1 to meet more application needs. Portions of the system will be described respectively. The same modules as shown in the schematic view of modularized structure of the information processing system shown in Fig.1 are not described any more here.

Preferably, the system 100 further comprises a login module 111 configured to receive and verify login data used by the user to log in the personal consumption space 101, similar to other typical systems with B/S architecture. Typically, the system 100 may be implemented as a user management mode based on a registered user. After the user registers in the system 100 for the first time, when he uses the terminal 200 to access to the system 100 for operation next time, he first at least sends a set of login data including the user's name and login password to the login module for verification of the user's identity. Alternatively, after the user registers in the system 100 for the first time, he at least uploads personal information such as user's name and login password to facilitate verification when he logs in next time. The system 100 optionally comprises a personal information storage space 112 for storing the personal information. Correspondingly, verification performed in the login module 111 refers to matching and verifying the login data and the personal information stored in the personal information storage space to check the user's identity, and opening an access right preset in the system 100 on this basis. Of course, according to different personal information uploaded by the users, the user login module 111 may automatically select an appropriate verifying method, for example, uploading one or more of biological information data, conventional user name/password data and identification data. Accordingly, the verification method includes one or more of biological information recognition verification (e.g., fingerprint data verification), information matching verification (username/password check) and identification recognition authentication (e.g., peripheral key authentication of portable computers). In a preferred embodiment, login module 111 is designed with the capability of multiple data verification.

Preferably, in order to provide the user with more personalized services, the personal information storage space 112 may contain common network community function modules such as personal homepage, personal documents, personal log, personal album/video, social map and social circles. In a preferred embodiment, the personal information storage space 112 may be integrated with the personal consumption space 101, and the two spaces share data to facilitate management thereof by the user.

More preferably, the system 100 further comprises a goods matching module 113, a classifying and placing module 114, a display module 115, an evaluating module 116 and a goods listing classifying module 117.

Specifically, the goods matching module 113 is configured to classify the subscription information and perform mutual matching between the subscription information. Specifically, the goods matching module 113 is used to classify the goods according to self-properties of the goods represented by the subscription information, such as goods quality, and additional properties of the goods such as price change information, and meanwhile perform matching combination for products in the same class to form a listing of products of the same class. The listing may be implemented in the form of a button, a pull-down list or an individually-set webpage for access (namely, a web link). As such, statistics is carried out for goods of the user's interest or goods represented by the subscription information in different classes so as to facilitate the user's management, modification or update of the goods, as well as modularization of the goods. In addition, the goods matching module 113 may be connected with the product information database 102 and achieve communication to match and compare the product information in the product information database 102 and the subscription information on the subscription information listing, and meanwhile feed back to the goods listing module 106 product information whose matching degree reaches a certain preset value. The preset threshold is usually set by utilizing self-properties of goods such as product quality, and additional properties of goods such as price change information. The classification and matching therein are implemented by comparing self-properties of goods and the matching degree, for example, the classification and matching are implemented according to self-properties such as price and quality of the goods or according to analogy of goods in the same class.

The classifying and placing module 114 is configured to place on different types of goods shelve different types of subscription information formed after classification by the goods matching module 113 or a listing thereof. As actually needed, the number of goods shelves may be arbitrarily combined or selected. Besides, on one goods shelf may be placed the same type of goods or different types of goods, or many types of goods shelves are permutated and combined to perform detailed classification of the goods shelves so that the listing of the subscription information or the listing of goods are more clearly presented to the user or more clearly displayed on the network transaction platform.

The display module 115 is used to present different types of goods information on the goods subscribing structure 104. Specifically, the display module 115 may employ a conventional display screen module, a display identifier on the network platform or the like. The goods information is usually self-property information related to the goods, such as goods quality parameter, or analogy goods information or equal-price goods information associated with the goods. Furthermore, the display module 115 updates goods information displayed on the goods subscribing structure 104 by it according to latest data. In the embodiment as shown in the figure, each of My Goods Shelves is provided with the display module 115. Certainly, an individual display module 115 may be provided to present related information on all goods shelves. The manner for providing the display module may be selected on one's own according to actual needs.

The evaluating module 116 is used to evaluate the already-subscribed goods information and store evaluation information. Specifically, after the user receives in the goods listing goods information sent by a third party (such as a retailer) and conforming to subscription conditions, he may evaluate the retailer's services and the goods itself such as goods quality or goods prices according to specific goods information, and meanwhile store the evaluation information in the evaluating module 116. Alternatively, after the user receives specific goods, he may post his comments according to goods quality, goods price and the like and store the evaluation information in the evaluating module 116.

The goods listing classifying module 117 is used to classify goods listing information stored in the goods listing module 106 into editable various sub-listing information, and meanwhile optionally update the sub-listing information according to update information sent by the goods listing classifying module 117. Specifically, usually the goods listing classifying module 117 may re-classify and combine the goods listing information stored in the goods subscribing structure 104, for example update or modify the subscription information listing and the goods listing stored in the goods subscribing structure 104.

Preferably, the information publishing module 103, the extracting module 107, the matching module 108, the feedback module 109, the subscription information listing module 105, the goods listing module 106, the goods listing generating module 110, the goods matching module 113, classifying and placing module 114, the display module 115, the evaluating module 116 and the goods listing classifying module 117 work in real time or at a set time. Reasonable arrangement of the real-time or set-time work of the above modules may improve the processing efficiency of the system 100 and reduce the load of the system when the access amount reaches a peak value.

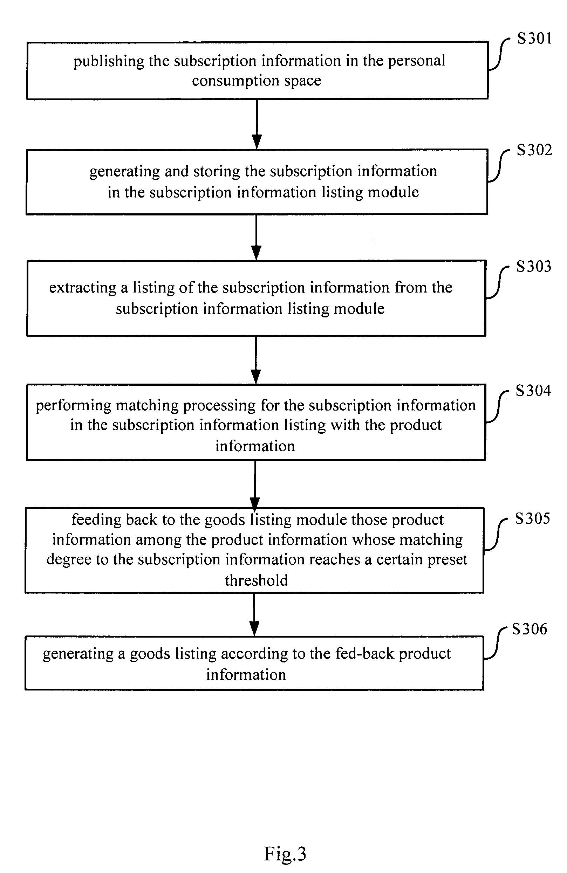

On the other hand, the method provided by the present invention will be described with reference to definitions of related terms in embodiments shown in Fig.1 and Fig.2. Reference is made to Figs.3-4.

First referring to Fig.3, Fig.3 illustrates a flow chart of a network transaction method utilizing a goods subscribing structure according to a preferred embodiment of the present invention. Preferably, the method may be implemented in combination with the structure of the system 100 shown in Fig.1 or Fig.2. The method is implemented based on the network transaction platform. The network transaction platform is provided with the user's personal consumption space 101. The personal consumption space 101 comprises a personal information storage space 112 and a goods subscribing structure 104. Preferably, the goods subscribing structure 104 comprises a subscription information listing module 105 and a goods listing module 106. The network transaction platform has product information database 102. The method comprises the following steps:

an information publishing step S301 of publishing the subscription information in the personal consumption space;

a subscription information listing generating step S302 of generating and storing the subscription information in the goods subscribing structure;

an extracting step S303 of extracting the listing of the subscription information from the goods subscribing structure;

a matching step S304 of performing match processing for the subscription information in the goods subscribing structure with the product information;

a feedback step S305 of feeding back to the goods subscribing structure those product information among the product information whose matching degree to the subscription information reaches a certain preset threshold;

A goods listing generating step S306 of generating the goods listing according to the fed-back product information.

More preferably, at step S302, the subscription information may be generated and stored by the subscription information listing module; at step S303, the listing of the subscription information may be extracted from the subscription information listing module; at step S304, the subscription information in the subscription information listing module may be matched with the product information; at step S305, the product information may be fed back to the goods listing module. To simplify the figure, the above preferred steps are not shown in Fig. 3.

Specifically, the matching step comprises: performing character matching, word matching, figure matching, annotation matching or fuzzy matching between the subscription information and the product information. Noticeably, the subscription information is personal demand information and comprises: one or more items among types, names, characteristics, brands, prices, inventory, promotional information, retailer, exhibit pictures or video and webpage links of products to be purchased. The matching information comprises one or more items among types, names, characteristics, brands, prices, inventory, promotional information, retailer, exhibit pictures or video and webpage links of the products, as well as transaction history or evaluation information of the products.

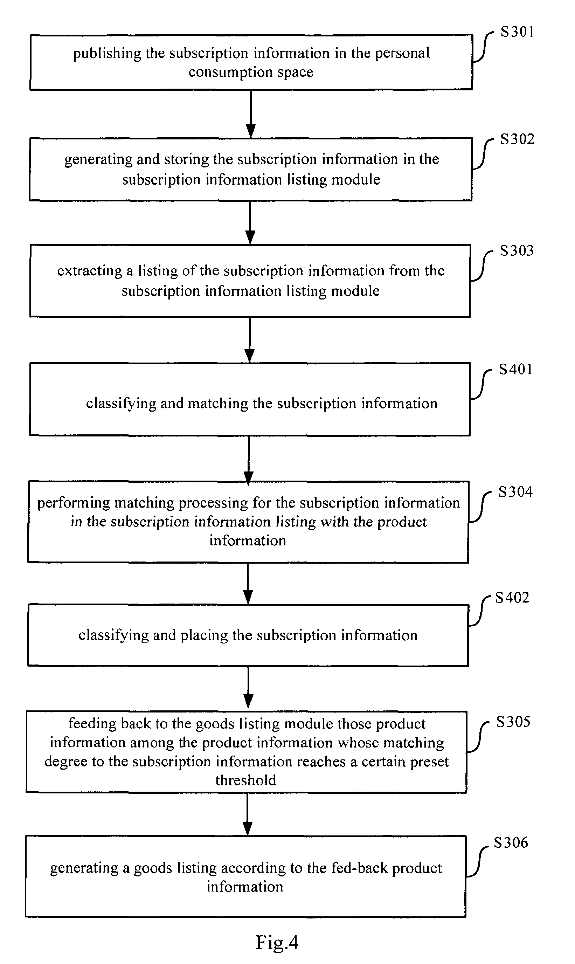

Referring to Fig.4, Fig.4 illustrates a flow chart of a network transaction method utilizing a goods subscribing structure according to another preferred embodiment of the present invention. The network transaction method shown in Fig.4 further comprises the following steps:

A goods matching step S401 of classifying and matching the subscription information. The step may be executed either before or after the matching step. The figure only shows an example for executing the goods matching step before the matching step S304.

A classifying and placing step S402 of classifying and arranging the subscription information may be executed either before or after the matching step S304 or the goods matching step S401. The figure only shows an example for executing the classifying and placing step S402 after the matching step S304, i.e., step S303-step S401-step S304-step S402-step S305, as shown in Fig.4.

A display step of displaying different types of goods information in the goods subscribing structure. The step may display the above relevant information after the forming of the subscription information listing or the goods listing.

An evaluating step of evaluating the already-subscribed goods information and storing evaluation information. The step may be executed after completion of goods subscription or transaction, or after the forming of the goods listing.

A goods listing classifying step of classifying goods listing information stored in the goods subscribing structure into editable various sub-listing information.

The above three steps may be implemented among above other steps or implemented in real time. Therefore, an order for executing them may be selected in many ways according to practical needs. They are not shown in Fig.4 for the sake of brevity of the figure.

Noticeably, preferably the method of generating the product information stored in the product information database comprises: generating the product information according to data uploaded by the product provider; and/or grasping data in the Internet to generate the product information. The information publishing step, the subscription information listing generating step, the extracting step, the matching step, the feedback step, the goods listing generating step, the goods matching step, the classifying and placing step, the display step, the evaluating step and the goods listing classifying step as described in the above embodiment of the method may be executed in real time or at a set time. Reasonable arrangement of the real-time or set-time work of the above modules may improve the processing efficiency of the method and reduce the load of the network transaction platform system when the access amount reaches a peak value.

In the preceding text, the matching module and matching step for performing match processing may employ character string matching technology. The character string matching technology is a matching technology which is relatively mature and applied extensively, and may be implemented by setting an algorithm. An algorithm with desirable performance such as BM algorithm or QS algorithm may be selected in the present embodiment. There are many modes for implementing matching, including not only character string matching mode based on the above algorithm but also other various matching modes. The threshold for matching to achieve a matching degree may be set and modified by the user or retailer according to actual needs in practice. So long as it better achieves interaction of information, it falls within the scope and spirits of the present invention and will not be detailed here. Certainly, the algorithms as listed above are only exemplary and intended to facilitate the understanding of specific matching and comparing forms in the present invention and not to limit the scope as claimed in the present invention.

For the sake of easy understanding of the present invention, an example of the network transaction platform system and method having the goods subscribing structure according to the present invention will be presented hereunder to make technical solutions claimed in the present invention and the spirits of the present invention more apparent. Specific depictions are presented as follows:

First, the present invention is described from a whole flow of the user using the personal consumption space and the goods subscribing structure to achieve network transaction.

The user establishes the personal consumption space in the network transaction platform. A specific implementation form is to build a MY STORE. The MY STORE induces goods subscribing structures. Optionally, in the present embodiment, the goods subscribing structures are set as one or more goods shelves in one webpage. The good shelf is a carrier where the user publishes the subscription information as well as a carrier where a processor extracts the subscription information. The good shelf may be a fixed goods shelf or a self-defined goods shelf. Typically, the goods shelf bears a shopping tag customized by one or more users. What is displayed in the goods shelf may be for example exhibition of a single item of goods obtained by searching according to the shopping tag. Specifically, the fixed good shelf may include a goods recommending module, a friend recommendation module and a historical listing module. In the historical listing module are stored goods already purchased by the user himself. On the goods shelf defined by the user himself, he may classify goods to be subscribed according to his own shopping likes, use of goods and his interest, for example, classify them according to category into My Kitchen, My Makeup Room, My Bedroom, My Wardrobe, MY 3C, My Shoebox; according to family members into Baby Room, Parent Room or the like; according to events into Travel to Zhangjiajie, Travel to Japan, Christmas or the like; according to time (weekly shopping/frequent shopping) into goods bought weekly/frequently, e.g., a weekly shopping listing; according to wishes into goods wanted by the user himself, e.g., birthday gift, wedding anniversary or the like. In the sense of the goods shelf, the goods shelf is a price comparator and a comment center as well as an intelligence center of the user. Just as a display board of a stock exchange does, the user may collect and display in real time price information and comment information of the goods subscribed by the user himself at different retailers; meanwhile, the goods shelf is a center of wishes of the user, a center of future needs, as well as the user's shopping history hall.

Then, during the user's subscription to the goods, upon completion of subscription confirmation, the user places the single item related to the subscription information on My Shelf. The subscribing methods usually include the following two methods:

Search subscription: batch subscription may be achieved by subscribing according to search result;

Direct subscription: one-to-one subscription may be achieved in the homepage of the subscribed object.

Certainly, other subscription manners may be employed. Selection or combination of multiple subscription manners may be performed according to different resources of users themselves.

The subscribed objects usually comprise retailers, classes, brands and single items. Certainly, other subscribed objects may be set, for example, activities, price zones and the like.

As far as the user himself is concerned, the subscribed goods mainly originate from the retailer subscribed by himself, MY STORE, and his own friends, such as relatives, friends, family members and good friends in the circle of interest.

The whole subscribing procedure usually comprises the following five portions:
1. Retailers for subscription
   The network transaction system first lists by default a listing of mystore-linked retailers according to the user's city for convenience of the user's subscription.
2. Subscription (category+brand)
   Either independent subscription or associated subscription may be performed:
   A. upon completion of subscription to a brand, the user will be incidentally reminded of several categories of the brand
   B. upon completion of subscription to a category, the user will be incidentally reminded of several brands in such category.
3. Subscription to a single item
   The user screens out, through a filter provided by the system, a listing of single items for which he wants to show concerns or interest or which he desires to buy, from a recommended goods catalogue from retailers, MYSTORE and friends, and performs subscription to a single item or a batch of goods.
   Wherein the recommended goods catalogue is explained as follows:
   A. The recommended goods catalogue comprises:
      Recommended goods catalogue=retailer's recommendation + MY STORE-recommend goods catalogue + friend-recommended goods catalogue

   B. The recommended goods catalogue is generated as follows:
   1) All retailers subscribed by the user generate a recommended goods catalogue according to the categories, brands and single items already subscribed by the user.
   2) MY STORE generates a recommended goods catalogue according to the categories, brands and single items already subscribed by the user, the catalogue mainly comprising bestsellers, and hotly-recommended and highly-promoted goods.
   3) The user's friends voluntarily recommend a catalogue of goods to the user whenever and wherever possible.

   Meanwhile, conditions conforming to the filter mainly comprise retailers or good friends, categories, brands, price zone, activities and the like.
4. Form subscription to goods shelf
   The user screens out a listing of single items to be subscribed by himself through the filter provided by the system, and performs subscription to a single item or a batch of goods. Each single item or each batch of goods as subscribed needs to be placed into a designated goods shelf to form his own personalized store.
5. Operation of the goods shelf
   The goods shelf is a price comparator, a comment center of goods as well as a shopping intelligence center of the user. MY STORE publishes the user-subscribed goods in real time everyday to his own goods shelf. The user may concern market dynamics and price changes of these goods in a long term. Just as a display board of a stock exchange does, the user may collect and display in real time price information and comment information of the goods subscribed by the user himself at different retailers; meanwhile, the goods shelf is a center of wishes of the user, a center of future needs, as well as the user's shopping history hall in which the user's transaction history information is stored.

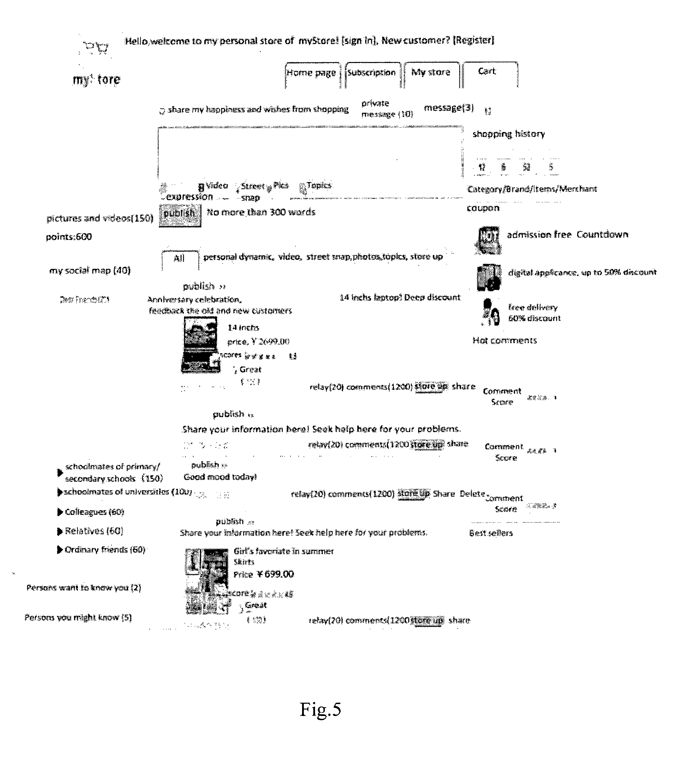

Secondly, an example of the user implementing the subscription will be described with reference to Figs.5-6:

As shown in Fig.5, the user first logs in the homepage of MY STORE via a network interface. The system will inquire whether the user is a new user. A new user cannot log in MY STORE unless he registers. After logging in MY STORE, the user can see an interface shown in Fig.5. On completion of registration and identity authentication, the user may perform various operations for MY STORE on the webpage shown in Fig.5, for example, publish the subscription information.

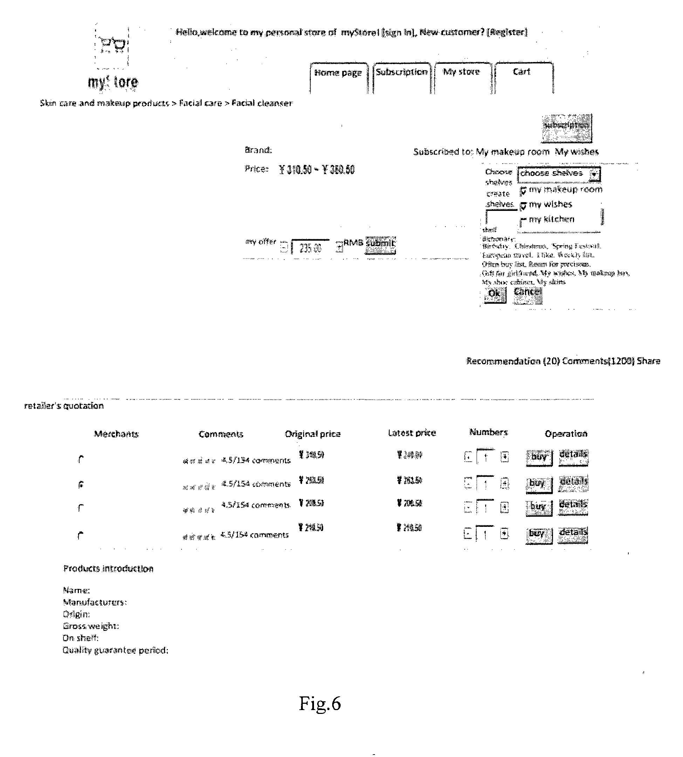

Fig.6 illustrates a specific example of the goods subscribing structure. In Fig.6, the user may select the type of goods shelves, for example My Makeup Room, My Wishes, My Kitchen or the like shown in the figure. In practical application, the goods shelf may have a self-updating function or a selecting function, e.g., a pull-down menu function as shown in the figure. After the user-subscribed goods enter the goods shelf, the retailer or service provider may analyze with respect to subscription demands for the goods on the goods shelf, and then send product information meeting the user's requirements to the user, for example the retailer's quotation as shown in the figure, including information such as targeting comment information, original price and latest price. Certainly, information types and content as shown may be selected in many ways, depending on the user's requirements.

MY STORE and the goods subscribing structure are implemented on the network transaction platform in the form of a graphic user interface (GUI) or webpage. The examples shown in Figs.5-6 are only exemplary, so no more detailed description is presented. The Examples aim to describe a whole procedure of the user implementing the personal network transaction by using MY STORE and the goods subscribing structure to make the present invention more apparent.

Noticeably, in more embodiments, other types of webpage function modules may be designed to exhibit and manage subscription information published by the user and listing information of goods obtained according to the subscription information, not only limited to the goods shelves shown in the present embodiment.

Although the exemplary embodiments and their advantages have been described in detail, it is readily apparent to those having ordinary skill in the art that various alterations, substitutions and modifications may be made to the embodiments without departing from the spirit of the present invention and the scope as defined by the appended claims. For other examples, it may be easily recognized by a person of ordinary skill in the art that the order of the process steps may be changed without departing from the scope of the present invention.

The network transaction method utilizing the goods subscribing structure according to the present invention may be implemented by a programmable logic device or implemented as computer program software. For example, the embodiments of the present invention may be a computer program product, and running of the program product enables the computer to perform the illustrated method. The computer program product comprises a computer readable memory medium, which medium comprises a computer program logic or code part for implementing various steps of the method. The computer readable memory medium may be a built-in medium in the computer or a mobile medium removable from the computer body (for example, a hot-plug technology storage device). The built-in medium includes, but not limited to, rewritable non-volatile memory, for example, RAM, ROM, flash memory, and hard disk. The mobile medium includes, but not limited to, an optical memory media (for example, CD-ROM and DVD), a magneto-optic memory media (for example MO), a magnetic memory media (for example, cassette or mobile hard disk), a media having a built-in rewritable non-volatile memory (for example, a memory card) and a media having a built-in ROM (for example, a ROM box).

Those skilled in the art should understand any computer system having an appropriate programming apparatus can execute various steps of the method of the present invention included in the program product. Although most preferred embodiments as depicted in the description focus on software programs, alternative embodiments as firmware and hardware for implementing the method of the present invention likewise fall within the scope as claimed by the present invention.

To those skilled in the art, it is apparent that the present invention is not limited to the details of the above exemplary embodiments, and the present invention may be implemented with other embodiments without departing from the spirit or basic features of the present invention. Thus, in any way, the embodiments should be regarded as exemplary, not limitative; the scope of the present invention is limited by the appended claims, instead of the above depictions. Thus, all variations intended to fall into the meaning and scope of equivalent elements of the claims should be covered within the present invention. No reference signs in the claims should be regarded as limiting the involved claims. Besides, it is apparent that the term "comprise" does not exclude other parts, units or steps, and singularity does not exclude plurality. A plurality of parts, units or modules depicted in a system claim may also be implemented by a single part, unit or module through software or hardware.

What are revealed above are only some preferred embodiments of the present invention. Certainly, this is not used to limit the scope of right of the present invention. Therefore, equivalent variations made according to the appended claims of the present invention still fall within the scope of the present invention.

## Claims

1. A network transaction platform system having a goods subscribing structure, the system comprising:
a product information database configured to store product information;
a personal consumption space configured to publish and reside a user's subscription information;
an information publishing module configured to publish the subscription information in the personal consumption space;
a goods subscribing structure which resides in the personal consumption space on the network transaction platform and comprises a subscription information listing module and a goods listing module, wherein the subscription information listing module is configured to generate and store a listing of the subscription information, and the goods listing module is configured to generate and store listing information of goods related to the subscription information;
an extracting module configured to extract the listing of the subscription information from the subscription information listing module;
a matching module configured to perform match processing for the subscription information in the subscription information listing with the product information;
a feedback module configured to feed back to the goods listing module those product information among the product information whose matching degree to the subscription information reaches a certain preset threshold;
a goods listing generating module configured to generate the goods listing according to the fed-back product information.

2. The network transaction platform system having a goods subscribing structure according to claim 1, wherein the subscription information comprises: at least one tag group which is comprised of at least one shopping tag for describing the user's shopping desire.

3. The network transaction platform system having a goods subscribing structure according to claim 1, wherein the network transaction platform system further comprises a login module configured to receive and verify login data used by the user to log in the personal consumption space.

4. The network transaction platform system having a goods subscribing structure according to claim 1, wherein the network transaction platform system further comprises a goods matching module configured to classify the subscription information and perform mutual matching between the subscription information.

5. The network transaction platform system having a goods subscribing structure according to claim 4, wherein the network transaction platform system further comprises a classifying and placing module configured to classify and place the subscription information.

6. The network transaction platform system having a goods subscribing structure according to claim 5, wherein the network transaction platform system further comprises a display module configured to display different types of goods information on the goods subscribing structure.

7. The network transaction platform system having a goods subscribing structure according to claim 6, wherein the network transaction platform system further comprises an evaluating module configured to evaluate the already-subscribed goods information and store evaluation information.

8. The network transaction platform system having a goods subscribing structure according to claim 7, wherein the network transaction platform system further comprises a goods listing classifying module configured to classify goods listing information stored in the goods listing module into editable various sub-listing information.

9. The network transaction platform system having a goods subscribing structure according to claim 3, wherein it comprises:
a personal information storage space for storing personal information uploaded by the use; wherein the login data can be verified by matching and verifying the login data and the personal information stored in the personal information storage space.

10. The network transaction platform system having a goods subscribing structure according to claim 3, wherein the verification of the login data can be implemented via one or more of biological information recognition verification, information matching verification and identification recognition authentication.

11. The network transaction platform system having a goods subscribing structure according to claim 4, wherein classification and matching are implemented by comparing self-properties of goods and the matching degree information.

12. The network transaction platform system having a goods subscribing structure according to claim 8, wherein the information publishing module, the extracting module, the matching module, the feedback module, the subscription information listing module, the goods listing module, the goods listing generating module, the goods matching module, classifying and placing module, the display module, the evaluating module and the goods listing classifying module work in real time or at a set time.

13. A network transaction method utilizing a goods subscribing structure, the method being implemented on the network transaction platform which is provided with a user's personal consumption space, the personal consumption space comprising a personal information storage space and a goods subscribing structure, the network transaction platform having a product information database, the method comprises the following steps:
an information publishing step of publishing the subscription information in the personal consumption space;
a subscription information listing generating step of generating and storing the subscription information in the goods subscribing structure;
an extracting step of extracting the listing of the subscription information from the goods subscribing structure;
a matching step of performing match processing for the subscription information in the goods subscribing structure with the product information;
a feedback step of feeding back to the goods subscribing structure those product information among the product information whose matching degree to the subscription information reaches a certain preset threshold;
a goods listing generating step of generating the goods listing according to the fed-back product information.

14. The network transaction method utilizing a goods subscribing structure according to claim 13, wherein the subscription information comprises at least one tag group which is comprised of at least one shopping tag for describing the user's shopping desire.

15. The network transaction method utilizing a goods subscribing structure according to claim 13, wherein the method further comprises a login step of receiving and verifying login data used by the user to log in the personal consumption space.

16. The network transaction method utilizing a goods subscribing structure according to claim 13, wherein the network transaction method further comprises a goods matching step of classifying the subscription information and performing mutual matching between the subscription information.

17. The network transaction method utilizing a goods subscribing structure according to claim 16, wherein the network transaction method further comprises a classifying and placing step of classifying and placing the subscription information.

18. The network transaction method utilizing a goods subscribing structure according to claim 17, wherein the network transaction method further comprises a display step of displaying different types of goods information on the goods subscribing structure.

19. The network transaction method utilizing a goods subscribing structure according to claim 18, wherein the network transaction method further comprises an evaluating method of evaluating the already-subscribed goods information and storing evaluation information.

20. The network transaction method utilizing a goods subscribing structure according to claim 19, wherein the network transaction method further comprises a goods listing classifying step of classifying the goods listing information in the good subscribing structure into editable various sub-listing information.

21. The network transaction method utilizing a goods subscribing structure according to claim 20, wherein the information publishing step, the subscription information listing generating step, the extracting step, the matching step, the feedback step, the goods listing generating step, the goods matching step, classifying and placing step, the display step, the evaluating step and the goods listing classifying step are executed in real time or at a set time.
